# EUROPÄISCHE PATENTSCHRIFT

(11) **EP 0 535 624 B1**
(45) Veröffentlichungstag und Bekanntmachung des Hinweises auf die Patenterteilung: **07.01.1998**
(21) Anmeldenummer: 92116715.1
(22) Anmeldetag: 30.09.1992
(51) Int. Cl.: G01N 21/15

(54) **Anordnung zur Spülluftversorgung in Abgastestgeräten**
Arrangement for supplying rinsing air to a device for testing exhaust gas
Agencement pour alimenter en air de rinçage des appareils de tests de gaz d'échappement

(30) Priorität: 04.10.1991 DE 4132926
(43) Veröffentlichungstag der Anmeldung: 07.04.1993
(73) Patentinhaber: Grundig E.M.V. Elektro-Mechanische Versuchsanstalt Max Grundig GmbH & Co. KG, 90762 Fürth (DE)
(72) Erfinder: Hallas, Ernst, Dr.rer.nat., Grundig E.M.V., D-8510 Fürth/Bay (DE)

(56) Entgegenhaltungen:
- EP-A- 0 064 200
- DE-U- 9 011 259
- US-A- 4 750 464

## Beschreibung

Die Erfindung betrifft eine Anordnung zur Spülluftversorgung in Abgastestgeräten.

In Abgasen von Otto- und Dieselmotoren befinden sich chemische Stoffe, die entsprechend gesetzlicher Regelungen bestimmte Grenzwerte nicht übersteigen dürfen. Weiterhin lasssen sich auf Grund der Konzentration bestimmter Stoffe im Abgas fehlerhafte Motoreinstellungen erkennen und teilweise sogar genauer definieren. Aus diesen Gründen werden bereits seit längerer Zeit sowohl in Werkstätten als auch in Einrichtungen, die auf Grund gesetzlicher Vorschriften Kraftfahrzeuge auf ihren technischen Zustand untersuchen, Abgastestgeräte eingesetzt.

Zur Messung der Trübung von Gasen, insbesondere zur Messung des Rußanteils in Abgasen von Dieselmotoren, sind bereits Verfahren und Einrichtungen bekannt, bei denen mittels eines speziellen Filterpapieres im Abgasstrom die durch den Rußanteil verursachte Gewichtszunahme des Filterpapieres oder die Farbtönung des Filterpapieres als Maß für den Rußgehalt ausgewertet wird.

Weiterhin sind Verfahren zur Vermessung von Dieselabgasen bekannt, bei denen die Opazität des Dieselrauchs gemessen wird. Diese Messverfahren ermitteln den Lichtverlust, der entsteht, wenn mit einer Lichtquelle definiert in eine Abgassäule eingestrahlt wird. Aus der von einem Photodetektor gemessenen Lichtstärke wird der Lichtverlust durch die Abgassäule ermittelt. Der Lichtverlust ist proportional zum Rußanteil des Dieselabgases.

Insbesondere durch den Rußanteil des Abgases treten immer wieder Verschmutzungen der Meßoptik des Abgastestgerätes auf. Aus der deutschen Offenlegungsschrift DE 2512538 A1 ist es bekannt, Bestandteile des Abgases, die sich auf den transparenten Scheiben auf der Ein- und Austrittsseite des Lichtstrahls in bzw. aus der Meßkammer abgesetzt haben, durch Abbrennen mit einem geeigneten Brenner zu beseitigen.
Weiterhin ist es aus der deutschen Offenlegungsschrift DE 1673230 A1 bekannt, ein Festsetzen von Bestandteilen des Abgases zu verhindern, indem ein Spülluftvorhang die Lichtquelle und das Photoelement vom Rauchgas trennt. Der Spülluftvorhang dient außerdem zur Kühlung der Meßoptik.
Ein derartiger Schutz der Meßoptik durch Spülluft wird bei bekannten Geräten erzeugt, indem eine geeignete Pumpe oder ein Ventilator Frischluft aus der Umgebung über ein der Messanordnung angepasstes Zuführungssystem an die Meßoptik führt. Da das Meßsystem eine vollständige Trennung des Spülluftstromes und des Abgasstromes nicht zuläßt, wird die Abgasstromgeschwindikeit von der Spülluft je nach Anordnung mehr oder weniger beeinflußt. Dieser Einfluß findet seinen Ausschlag auch in den erhaltenen Meßwerten, da die effektive optische Meßkammerlänge durch die Spülluft beeinflußt wird.
Beispielsweise wird die optische Meßkammerlänge verkleinert, wenn die Spülluftstromgeschwindigkeit größer ist als die Abgasstromgeschwindigkeit. In diesem Fall wird der Abgasstrom durch den Spülluftstrom zusammengedrückt. Für den Fall, daß die Spülluftstromgeschwindigkeit geringer ist, als die Abgasstromgeschwindigkeit wird der Spülluftstrom zusammengedrückt, der Abgasstrom aufgeweitet und die effektive optische Meßkammerlänge vergrößert sich.

Aus der europäischen Patentanmeldung EP 0 064 200 A2 ist eine Anordnung zum Schutz der Meßoptik eines Abgastestgerätes vor Verschmutzung bekannt, bei der mittels eines Spülluftstromes der Abgasstrom von der Meßoptik weitgehend abgetrennt wird. Diese Anordnung enthält Mittel zur Beeinflussung der Stärke des Spülluftstromes, um einen Abgleich auf die Geschwindigkeit des Abgasstromes durchzuführen. Der Abgleich basiert dort auf einer Vergleichsmessung, bei der die Konzentration eines Gases mittels einer herkömmlichen Meßmethode, beispielsweise einer chemischen Meßmethode, bestimmt wird und die Stärke des Spülluftstromes so eingestellt wird, daß bei der optischen Messung ein möglichst genauer Wert der vorher bestimmten Konzentration erreicht wird.
Diese Anordnung hat den Nachteil, daß der Abgleich einmalig bei der Inbetriebnahme des Systems durchgeführt wird und somit bei einer Veränderung der Geschwindigkeit des Abgasstromes wieder Verfälschungen der optischen Meßkammerlänge mit den oben geschilderten Folgen auftreten.

Aus DE-U-9 011 259 ist es bekannt, einen Ventilator für die Spülluftversorgung drehzahlregelbar auszuführen. Dort ist weiterhin die Aufgabe angegeben, die Ventilatorendrehzahl direkt oder indirekt mit der Drehzahl des Motors zu koppeln.

Aufgabe der Erfindung ist es deshalb, den Spülluftstrom so zu steuern, daß sein Einfluß auf den Abgasstrom reduziert wird.

Diese Aufgabe wird durch die Merkmale des Anspruchs 1 gelöst.

Diese Aufgabe wird gemäß der Erfindung gelöst, indem die Spülluftgeschwindigkeit in Abhängigkeit von der Abgasstromgeschwindigeit in der Meßanordnung gesteuert wird. Die Abgasstromgeschwindigkeit kann dabei aus der Drehzahl des Motors, dessen Abgas gemessen wird, bestimmt werden. Dazu wird die Drehzahl des Motors an eine Steuereinheit übermittelt, die wiederum den Ventilator oder die Pumpe so ansteuert, daß ein Spülluftstrom in Abhängigkeit von der Abgasstromgeschwindigkeit erzeugt wird. Mit der erfindungsgemäßen Anordnung ist es möglich, eine Spülluftstromgeschwindigkeit zu erreichen, die gleich der Abgasstromgeschwindigkeit ist, so daß die gegenseitige Beeinflussung des Spülluftstromes und des Abgasstromes auf ein Minimum reduziert wird. Insbesondere wird erreicht, daß der Spülluftstrom den Abgasstrom an den Berührungspunkten nicht verändert, wodurch auch die effektive optische Meßkammerlänge nicht verändert wird. Die Erfindung sieht vor, daß in der Meßzelle ein Sensor angebracht ist, der die Geschwindigkeit des Abgasstromes mißt. Das Meßergebnis wird an eine Steuereinheit gegeben, die den Ventilator oder die Pumpe, welche den Spülluftstrom erzeugt, ansteuert.

Eine vorteilhafte Ausgestaltung der Erfindung sieht einen zweiten Sensor zur Messung der Geschwindigkeit des Spülluftstromes vor, der ebenfalls das Meßergebnis an die Steuereinheit weitergibt. Damit kann in der Steuereinheit ständig ein Vergleich der Abgasstromgeschwindigkeit und der Spülluftgeschwindigkeit erfolgen, wodurch die Spülluftgeschwindigkeit besser ausgeregelt werden kann.

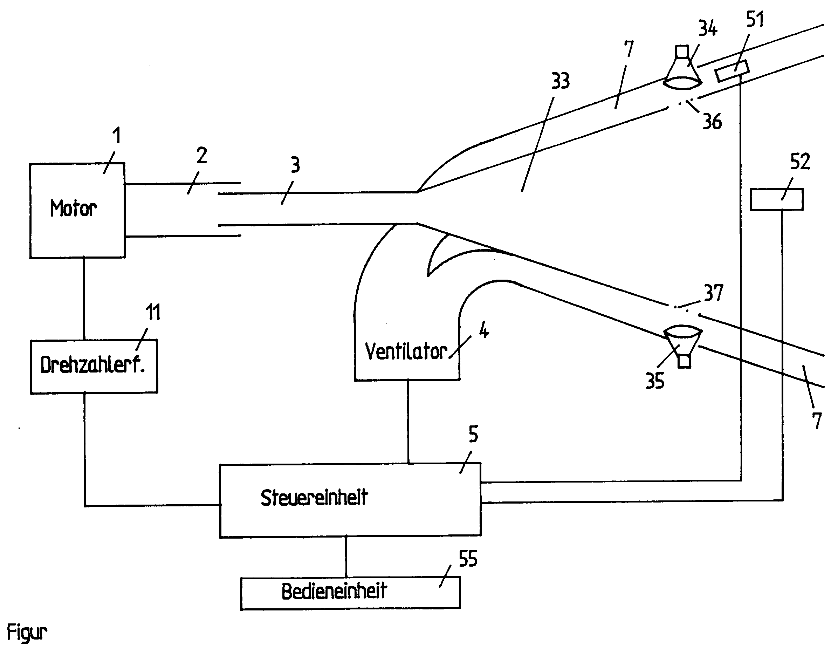

Im folgenden wird die Erfindung an Hand der Figur näher erläutert.

Diese Figur zeigt einen schematischen Aufbau einer Meßanordnung, bestehend aus dem Motor 1, der lediglich als Funktionsblock dargestellt ist und alle üblichen Funktionselemente eines Motors enthalten soll. Die Abgase des Motors 1 werden über den Auspuff 2 abgeführt, in den eine Meßsonde 3 eingebracht ist, die in die Meßzelle 33 übergeht. An der Meßzelle ist die Meßoptik, bestehend aus dem Lichtsenderelement 34 und dem Lichtempfängerelement 35 quer zur Richtung des Abgasstromes angebracht, wobei der Meßlichtstrahl durch das Eintrittsfenster 36 in die Meßzelle 33 einstrahlt und durch das Austrittsfenster 37 an das Lichtempfängerelement 35 gelangt.
Der Motor 1 ist außerdem mit einem Drehzahlmeßgerät 11 verbunden, von dem eine Leitung an die Steuereinheit 5 führt. In der Steuereinheit 5 wird die bei der gemessenen Drehzahl des Motors zu erwartende Abgasstromgeschwindigkeit in der Meßzelle 33 errechnet, wobei bestimmte für einen Motor typische Parameter, die für die Berechnung notwendig sind, über die Bedieneinheit 55 eingegeben werden können. Von der Steuereinheit 5 führt eine Steuerleitung an einen Ventilator 4. Über diese Steuerleitung wird die Drehzahl und damit die Spülluftgeschwindigkeit von der Steuereinheit 5 geregelt. Die Spülluft wird von den Spülluftkanälen 7 an der Meßoptik 34,35 vorbeigeleitet.
Gemäß der Erfindung wird in die Meßzelle 33 ein Geschwindigkeitssensor 52 eingebracht, um die Abgasstromgeschwindikeit zu bestimmen. Der Abgasstromgeschwindigkeitswert wird der Steuereinheit 5 über eine Datenleitung zugeführt. In diesem Fall kann die Steuerung der Drehzahl des Ventilators 4 in Abhängigkeit von der Abgasstromgeschwindigkeit durchgeführt werden.
Zusätzlich kann auch noch in den Spülluftkanal 7 ein weiterer Geschwindigkeitssensor 51 zur Bestimmung der Spülluftgeschwindigkeit eingebracht werden. Dieser Geschwindigkeitssensor 51 ist ebenfalls mit der Steuereinheit 5 über eine Datenleitung verbunden.
In der Steuereinheit 5 wird in diesem Fall die gemessene Spülluftgeschwindigkeit mit der gemessenen Abgasgeschwindigkeit in der Meßzelle 33 verglichen. In Abhängigkeit vom Vergleichsergebnis wird ein Steuersignal an den Ventilator 4 gegeben und so die Spülluftgeschwindigkeit der Abgasstromgeschwindigkeit angepasst.

## Patentansprüche

1. Anordnung zum Schutz der Meßoptik einer Meßzelle (33) in einem Abgastestgerät für einen Verbrennungsmotor vor Verschmutzung, wobei die Anordnung aus einer Einheit (4) , Spülluftkanälen (7), einem Lichtsendeelement (34), einem Lichtempfängerelement (35), einem Eintrittsfenster (36), einem Austrittsfenster (37), einer Steuereinheit (5), einer Bedieneinheit (55) und einem Sensor (52) besteht, wobei das Abgastestgerät einen Abgasstrom direkt aus einem Auspuff (2) in eine Meßsonde (3) einleitet, wobei ein Spülluftstrom die Verschmutzung der Meßoptik durch den Abgasstrom verhindert, indem der Spülluftstrom die Meßoptik umspült und eine Beaufschlagung der Meßoptik durch den Abgasstrom verhindert, wobei die Einheit (4) zur Erzeugung des Spülluftstromes von der Steuereinheit (5) derart angesteuert ist, daß die Spülluftstromgeschwindigkeit gleich der Abgasstromgeschwindigkeit ist und wobei die Anordnung die Spülluftkanäle (7) zur Führung des Spülluftstromes aufweist, die im Grenzflächenbereich, d.h. im Bereich der Ein- und Austrittsfenster (36,37), den Spülluftstrom parallel zum Abgasstrom führen und wobei die Steuereinheit (5) zur Ansteuerung der Einheit (4) zur Erzeugung des Spülluftstromes vorgesehen ist, wobei der Sensor (52) zur Bestimmung der Geschwindigkeit des Abgasstromes in der Meßzelle (33) in dem Abgastestgerät angeordnet ist und die Ansteuerung in Abhängigkeit der Geschwindigkeit des Abgasstromes in der Meßzelle (33) erfolgt, wobei die effektive optische Meßkammerlänge nicht verändert wird.

2. Anordnung nach Anspruch 1,
**dadurch gekennzeichnet**,
daß im Spülluftkanal (7) ein Sensor (51) zur Bestimmung der Geschwindigkeit des Spülluftstromes angeordnet ist, daß die Steuereinheit (5) zum Vergleich der Geschwindigkeit des Spülluftstromes und der Geschwindigkeit des Abgasstromes, sowie zur Ansteuerung der Einheit (4) zur Erzeugung des Spülluftstromes ausgebildet ist.

## Claims

1. Arrangement for protecting the measuring optics of a measuring cell (33) in an exhaust-gas test device for an internal combustion engine against soiling, in which the arrangement comprises a unit (4), flushing-air ducts (7), a light-transmitting element (34), a light-receiving element (35), an entry window (36), an exit window (37), a control unit (5), an operating unit (55) and a sensor (52), in which the exhaust-gas test device introduces an exhaust-gas stream directly from an exhaust pipe (2) into a measuring probe (3), in which a flushing-air stream prevents the soiling of the measuring optics by the exhaust-gas stream as a result of the flushing-air stream flowing round the measuring optics and preventing the exhaust-gas stream from acting on the measuring optics, in which the unit (4) for producing the flushing-air stream is controlled by the control unit (5) in such a way that the flushing-air stream velocity is equal to the exhaust-gas stream velocity and in which the arrangement has the flushing-air ducts (7) for conveying the flushing-air stream which convey the flushing-air stream parallel to the exhaust-gas stream in the boundary-surface region, i.e. in the region of the entry and exit windows (36, 37), and in which the control unit (5) is provided to control the unit (4) for producing the flushing-air stream, in which the sensor (52) for determining the velocity of the exhaust-gas stream in the measuring cell (33) is disposed in the exhaust-gas test device and the control takes place as a function of the velocity of the exhaust-gas stream in the measuring cell (33), the effective optical measuring chamber length being unaltered.

2. Arrangement according to Claim 1, characterized in that a sensor (51) for determining the velocity of the flushing-air stream is disposed in the flushing-air duct (7) and in that the control unit (5) is designed to compare the velocity of the flushing-air stream and the velocity of the exhaust-gas stream and also to control the unit (4) for producing the flushing-air stream.

## Revendications

1. Dispositif pour protéger le système optique de mesure d'une cellule de mesure (33) dans un appareil de test des gaz d'échappement pour un moteur à combustion interne avant un salissement, et le dispositif étant constitué par une unité (4), des canaux d'air de balayage /7), un élément photoémissif (34), un élément de réception de lumière (35), une fenêtre d'entrée (36), une fenêtre de sortie (37), une unité de commande (5), une unité de manipulation (55) et un capteur (52), et dans lequel l'appareil de test des gaz d'échappement introduit un courant de gaz d'échappement directement depuis un pot d'échappement (2) dans une sonde de mesure (3), un courant d'air de balayage empêche le salissement du système optique de mesure par le courant de gaz d'échappement par le fait que le courant d'air de balayage effectue un balayage enveloppant du dispositif optique de mesure et empêche que le système optique de mesure soit chargé par le courant de gaz d'échappement, l'unité (4) servant à produire le courant d'air de balayage est commandée par l'unité de commande (5) de telle sorte que la vitesse du courant d'air de balayage est égal à la vitesse du courant des gaz d'échappement, et dans lequel le dispositif comporte des canaux d'air de balayage (7) servant à guider le courant d'air de balayage et qui au niveau d'interfaces, c'est-à-dire dans la zone des fenêtres d'entrée et de sortie (36, 37), guident le courant d'air de balayage parallèlement au courant des gaz d'échappement, et l'unité de commande (5) est prévue pour la commande de l'unité (4) servant à produire le courant d'air de balage, le capteur (52) servant à déterminer la vitesse du courant des gaz d'échappement dans la cellule de mesure (33) est disposée dans l'appareil de test des gaz d'échappement et la commande d'effectue en fonction de la vitesse du courant des gaz d'échappement dans la cellule de mesure (33), la longueur optique effective de la chambre de mesure n'étant pas modifiée.

2. Dispositif selon la revendication 1, caractérisé en ce qu'un capteur (52) servant à déterminer la vitesse du courant d'de balayage est disposé dans le canal d'air de balayage (7), que l'unité de commande (5) est agencée de manière à comparer la vitesse du courant d'air de balayage et la vitesse du courant des gaz d'échappement et à commander l'unité (4) de production du courant d'air de balayage.
